# EUROPÄISCHE PATENTSCHRIFT

(11) **EP 3 440 522 B1**
(45) Veröffentlichungstag und Bekanntmachung des Hinweises auf die Patenterteilung: **27.12.2023**
(21) Anmeldenummer: 17703674.6
(22) Anmeldetag: 26.01.2017
(51) Int. Cl.: G05B 19/418

(54) **VORRICHTUNG FÜR MINDESTENS EINEN INDUSTRIELLEN AUTOMATISIERTEN PROZESS**
DEVICE FOR AT LEAST ONE INDUSTRIAL AUTOMATED PROCESS
DISPOSITIF POUR AU MOINS UN PROCESSUS D'AUTOMATISATION INDUSTRIELLE

(30) Priorität: 08.04.2016 DE 102016106522
(43) Veröffentlichungstag der Anmeldung: 13.02.2019
(73) Patentinhaber: Windmöller & Hölscher KG, 49525 Lengerich (DE)
(72) Erfinder: SCHMITZ, Torsten, 48268 Greven (DE)
(86) Internationale Anmeldenummer: PCT/EP2017/051690
(87) Internationale Veröffentlichungsnummer: WO 2017/174223

(56) Entgegenhaltungen:
- EP-A1- 1 471 008
- EP-A1- 1 471 008
- EP-A2- 1 462 894
- DE-A1- 19 903 826
- DE-A1-102013 101 628
- DE-B4- 10 348 564

## Beschreibung

Die vorliegende Erfindung betrifft eine Vorrichtung für mindestens einen (industriellen) automatisierten Prozess. Ferner bezieht sich die Erfindung auf ein System sowie auf ein Verfahren.

Es ist aus dem Stand der Technik bekannt, dass sich bei industriellen zumindest teilautomatisierten Prozessen, wie zum Beispiel Wäge- und/oder Abfüll- und/oder Anordnungs- und/oder Verpackungsprozessen, eine Vielzahl von Einflussfaktoren auf die Qualität des Prozessergebnisses auswirkt. Das Prozessergebnis ist beispielsweise ein durch den Prozess hergestelltes Produkt und/oder eine palettisierte Ware, welche beispielsweise mit Folie verpackt und/oder gesichert ist. Die Einflussfaktoren können dabei zum Beispiel die Stabilität der Ladung beeinflussen und zum Beispiel auch dazu führen, dass die Ladungssicherheit nicht mehr gegeben ist. Beispielhaft können als Einflussfaktoren auf die Qualität einer Palette mit Granulatsäcken als palettisierte Ware insbesondere die geometrische Beschaffenheit und der Füllgrad des Granulatsacks, der Reibungskoeffizient der verwendeten FFS (Form-Fill-Seal)-Folie, das Stapelmuster sowie etwaige Zwischenlagen, das mehrdimensionale Spannungs-Dehnungsverhalten einer Folie, und/oder die Parametrisierung einer Verpackungsmaschine genannt werden.

Derartige Einflussfaktoren treten dabei üblicherweise in jedem Teilprozess des Gesamtprozesses auf. In jedem dieser Teilprozesse wirkt dabei mindestens eine Einzelmaschine, zum Beispiel ein industrieller Roboter, auf das zu verarbeitende und/oder zu verpackende Material beziehungsweise Produkt ein. In jedem dieser Teilprozesse können dabei Einflussfaktoren auftreten, wie zum Beispiel Abweichungen von den vorgegebenen Material- und/oder Produkteigenschaften, wie zum Beispiel von Folieneigenschaften, und/oder Abweichungen von Maschinenparametern der Einzelmaschinen im jeweiligen Teilprozess, und/oder dergleichen. Auch wenn eine solche Abweichung sich im jeweiligen Teilprozess nicht unbedingt (bemerkbar) negativ auf das Teilprozessergebnis auswirkt und daher unerkannt bleibt, können diese Abweichungen bei den weiteren Teilprozessen zu einer Qualitätsverminderung und einem unzureichenden Prozessergebnis des Gesamtprozesses führen. So wirkt sich beispielsweise eine fehlerhafte Anordnung der Waren durch einen Palettierer noch nicht negativ im Teilprozess "Palettieren" aus, kann jedoch in einem nachgelagerten Teilprozess, zum Beispiel beim Verpacken durch einen Haubenstretcher (Stretch Hooder), zu einem unzureichenden Prozessergebnis (zum Beispiel zu einer unzureichenden Ladungssicherung) führen. Weiter ist es oft sehr aufwendig und komplex, derartige Einflüsse sowie die Auswirkungen auf das Prozessergebnis hinreichend genau zu bestimmen und/oder die Prozessqualität zu gewährleisten.

Beispielhafte industrielle Prozesse sind aus den Schriften EP 1 471 008 A1, DE 10 2013 101628 A1, EP 1 462 894 A2 und DE 10 2013 101628 A1 bekannt.

Es ist daher eine Aufgabe der vorliegenden Erfindung, die voranstehend beschriebenen Nachteile zumindest teilweise zu reduzieren. Insbesondere ist es Aufgabe der vorliegenden Erfindung, eine verbesserte und/oder vereinfachte und/oder kostengünstigere und/oder zuverlässigere Bewertung des Prozesses und/oder Qualitätssicherung zu ermöglichen.

Die voranstehende Aufgabe wird gelöst durch eine Vorrichtung mit den Merkmalen des Anspruchs 1, ein System mit den Merkmalen des Anspruchs 3 sowie durch ein Verfahren mit den Merkmalen des Anspruchs 5. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen System sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Vorrichtung, angepasst zum Verwenden in einem System, angepasst zur Durchführung mindestens eines industriellen (zumindest teilautomatisierten und/oder vollständig automatisierten) Prozesses, nämlich einen Wägeund/oder Abfüll- und/oder Anordnungs- und/oder Verpackungsprozess, wobei der gesamte Prozess zumindest zwei Teilprozesse umfasst, wobei die Vorrichtung eine Einzelmaschine des Systems darstellt, und wobei teilprozessübergreifend eine Prozessvorgabe vordefiniert ist, welche mindestens einen Vergleichswert für mindestens einen gesamtprozessrelevanten Prozessdatenwert aufweist. Bevorzugt umfasst dabei der Prozess mehrere Teilprozesse, zum Beispiel den Wägeprozess als einen ersten Teilprozess und/oder den Abfüllprozess als einen zweiten Teilprozess und/oder den Anordnungsprozess als einen dritten Teilprozess und/oder den Verpackungsprozess als einen vierten Teilprozess, wobei sämtliche Teilprozesse den gesamten Prozess bilden. Besonders bevorzugt ist dabei der Verpackungsprozess dem Anordnungsprozess (zum Beispiel als Palettierungsprozess) nachgelagert und/oder der Anordnungsprozess dem Abfüllprozess nachgelagert und/oder der Abfüllprozess dem Wägeprozess nachgelagert. Vorzugsweise ist für jeden Teilprozess jeweils mindestens eine (insbesondere für diesen Teilprozess spezifische) Einzelmaschine vorgesehen, um den Teilprozess zumindest teilweise durchzuführen, wobei zum Beispiel mindestens eine dieser jeweiligen Einzelmaschinen als erfindungsgemäße Vorrichtung ausgeführt sein kann.

Es ist vorgesehen, dass die erfindungsgemäße Vorrichtung eine Datenspeichereinheit zur dauerhaften Speicherung des mindestens einen gesamtprozessrelevanten Prozessdatenwertes aufweist.

Es ist insbesondere vorgesehen, dass die erfindungsgemäße Vorrichtung mindestens einen Sensor zur Ermittlung des mindestens einen gesamtprozessrelevanten Prozessdatenwertes, welcher für den gesamten Prozess relevant ist, durch eine Erfassung mindestens eines gesamtprozessrelevanten Teilprozessparameters der (erfindungsgemäßen) Vorrichtung aufweist wobei der Teilprozessparameter eine Messgröße an der Vorrichtung ist. Der Teilprozessparameter ist dabei eine Messgröße an der Vorrichtung (bzw. Einzelmaschine), welche beispielsweise direkt oder indirekt durch den Sensor erfasst wird, zum Beispiel ein (Dreh-) Moment oder eine Temperatur oder eine elektrische Größe oder dergleichen an der Vorrichtung. Insbesondere gibt der Sensor dabei in Abhängigkeit von dem erfassten Teilprozessparameter und/oder von der gemessenen Messgröße den Teilprozessdatenwert als Erfassungswert des Teilprozessparameters beziehungsweise Messwert der Messgröße aus. Bevorzugt ermöglicht dabei der Prozessdatenwert eine qualitative und/oder quantitative Aussage über den Teilprozessparameter, welcher beispielsweise eine physikalische Größe und/oder eine Eigenschaft an der erfindungsgemäßen Vorrichtung (bzw. Einzelmaschine) und/oder an dem Material und/oder an dem Produkt ist.

Weiterist eine Verarbeitungsvorrichtung der erfindungsgemäßen Vorrichtung vorgesehen, welche zur Verarbeitung des Prozessdatenwertes mit dem Sensor elektrisch, das heißt zum Beispiel direkt oder indirekt elektrisch und/oder kabelgebunden und/oder über Funk, verbunden ist. Die Verarbeitungsvorrichtung umfasst zum Beispiel mindestens eine Elektronikkomponente, wie zum Beispiel einen integrierten Schaltkreis und/oder einen Mikroprozessor, um den Prozessdatenwert schnell und zuverlässig auszuwerten. Insbesondere kann es möglich sein, dass durch die Verarbeitungsvorrichtung ein Prozessdatenwert ausgewertet wird, welcher bei einem vorgelagerten Teilprozess und/oder einer vorgelagerten Einzelmaschine ermittelt wurde.

Weiter ist eine Schnittstellenvorrichtung zur Datenverbindung vorgesehen, welche zum Beispiel mit einer Übertragungsvorrichtung verbunden ist und/oder werden kann. Dabei dient dabei die Schnittstellenvorrichtung zur Weitergabe des Prozessdatenwertes an mindestens eine im Prozess vorgelagerte und/oder nachgelagerte Einzelmaschine, das heißt insbesondere eines vorgelagerten beziehungsweise nachgelagerten Teilprozesses, wobei anhand des Prozessdatenwertes durch einen Vergleich mit der vordefinierten Prozessvorgabe der gesamte Prozess bewertbar ist. Die Einzelmaschinen können dabei zum Beispiel als weitere erfindungsgemäße Vorrichtungen ausgeführt sein, wobei sie sich dann jedoch teilprozessspezifisch unterscheiden. So ist beispielsweise eine erste Einzelmaschine bzw. eine erste erfindungsgemäße Vorrichtung als Palettierer und/oder eine zweite Einzelmaschine bzw. eine zweite erfindungsgemäße Vorrichtung als Verpackungsmaschine ausgeführt.

Ebenfalls unter Schutz gestellt ist auch eine Verpackungsmaschine, insbesondere ein Haubenstretcher, wobei die Verpackungsmaschine zumindest teilweise gemäß der erfindungsgemäßen Vorrichtung ausgeführt ist und/oder als Einzelmaschine im erfindungsgemäßen System und/oder mit dem erfindungsgemäßen Verfahren Verwendung findet.

Ebenfalls unter Schutz gestellt ist auch ein Palettierer, wobei der Palettierer zumindest teilweise gemäß der erfindungsgemäßen Vorrichtung ausgeführt ist und/oder als Einzelmaschine im erfindungsgemäßen System und/oder mit dem erfindungsgemäßen Verfahren Verwendung findet.

Ebenfalls unter Schutz gestellt ist auch eine Füllmaschine, vorzugsweise eine Form-Fill-Seal-Maschine, wobei die Füllmaschine zumindest teilweise gemäß der erfindungsgemäßen Vorrichtung ausgeführt ist und/oder als Einzelmaschine im erfindungsgemäßen System und/oder mit dem erfindungsgemäßen Verfahren Verwendung findet.

Merkmale und Details, die im Zusammenhang mit der erfindungsgemäßen Vorrichtung, dem erfindungsgemäßen Verfahren und/oder dem erfindungsgemäßen System beschrieben sind, gelten jeweils selbstverständlich auch im Zusammenhang mit der erfindungsgemäßen Füllmaschine und/oder der erfindungsgemäßen Verpackungsmaschine und/oder dem erfindungsgemäßen Palettierer.

Es ist weiter vorgesehen, dass anhand des Prozessdatenwertes durch Vergleichen mit einer vordefinierten Prozessvorgabe der gesamte Prozess bewertbar ist. Dies hat den Vorteil, dass auch gesamt- und/oder teilprozessirrelevante Prozessdatenwerte, welche üblicherweise im Teilprozess unerkannt bleiben, zur Bewertung des gesamten Prozesses dienen können und damit zum Beispiel die Prozessqualität verbessern und/oder eine Qualitätskontrolle ermöglichen können.

Beispielsweise umfasst der Teilprozessparameter mindestens einen der folgenden Parameter oder ist abhängig von mindestens einem der folgenden Parameter:
- die Qualität einer Palette mit Granulatsäcken als palettisierte Ware bzw. als Produkt, insbesondere die geometrische Beschaffenheit und/oder der Füllgrad des Granulatsacks,
- der Reibungskoeffizient der verwendeten FFS-Folie,
- das Stapelmuster,
- etwaige Zwischenlagen,
- das mehrdimensionale Spannungs-Dehnungsverhalten einer Folie, und/oder
- die Parametrisierung einer Verpackungsmaschine.

Der ermittelte Prozessdatenwert ist dabei beispielsweise ein gesamtprozessirrelevanter und/oder ein teilprozessirrelevanter Prozessdatenwert. Darunter wird beispielsweise verstanden, dass der Prozessdatenwert für den Teilprozess, bei welchem er an der erfindungsgemäßen Vorrichtung und/oder Einzelmaschine des Teilprozesses ermittelt wird, üblicherweise nicht relevant ist und/oder nur funktional innerhalb des Teilprozesses relevant ist und/oder nicht (zum Beispiel dauerhaft) gespeichert und/oder überwacht und/oder verglichen und/oder bewertet wird.

Bevorzugt umfasst dabei der Teilprozessparameter (auch) zum Beispiel solche Parameter eines Teilprozesses, welche für den jeweiligen Teilprozess nur funktional relevant sind und daher zum Beispiel üblicherweise nicht gespeichert werden müssen. Dabei kann der Prozessparameter beispielsweise eine Messgröße und/oder ein Maschinenparameter und/oder ein Produktparameter und/oder ein Materialparameter im jeweiligen Teilprozess sein. Insbesondere ist dabei der Prozessdatenwert ein Wert des Prozessparameters, welcher zum Beispiel auf einer Anzeigevorrichtung (zum Beispiel ohne dauerhaft gespeichert zu werden) für einen Bediener der Einzelmaschine und/oder erfindungsgemäßen Vorrichtung des Teilprozesses angezeigt wird. Bevorzugt erfolgt dabei eine dauerhafte Speicherung des Prozessdatenwertes unabhängig von dieser Anzeige und/oder funktionalen Überprüfung.

Gemäß einer vorteilhaften Weiterbildung der Erfindung kann vorgesehen sein, dass die Vorrichtung eine, insbesondere nicht-flüchtige und/oder zur persistenten Datenspeicherung ausgeführte, Datenspeichereinheit aufweist, um den ermittelten Prozessdatenwert insbesondere dauerhaft zu speichern. Die Datenspeichereinheit ist dabei insbesondere eine elektronische Datenspeichereinheit, um den Prozessdatenwert dauerhaft, das heißt zum Beispiel persistent, zu speichern. Insbesondere erfolgt diese Speicherung unabhängig von einer Anzeige des Prozessdatenwertes innerhalb des Teilprozesses, sodass auch eine Auswertung des Prozessdatenwertes außerhalb des Teilprozesses beziehungsweise durch andere Teilprozesse erfolgen kann. Dies ermöglicht zum Beispiel eine Bewertung einer Abweichung in den jeweiligen Teilprozessen hinsichtlich einer Qualitätskontrolle des gesamten Prozesses (z. B. auch der vorgelagerten Teilprozesse), zum Beispiel zur Gewährleistung der Ladungssicherheit. Beispielsweise können dabei auch die Prozessdatenwerte von unterschiedlichen Teilprozessen des gesamten Prozesses zusammengeführt und/oder gemeinsam ausgewertet werden. Dies ermöglicht es zum Beispiel, Abweichungen oder Fehler anhand der Prozessdatenwerte zu erfassen, welche sich insbesondere nur teilprozessübergreifend auf den gesamten Prozess auswirken und sonst ggf. bei einer rein teilprozessinternen Auswertung unerkannt blieben.

Vorteilhafterweise kann bei der Erfindung vorgesehen sein, dass die erfindungsgemäße Vorrichtung als eine Einzelmaschine, insbesondere eine industrielle Maschine, und/oder als ein (industrieller) Roboter ausgeführt ist. Insbesondere dient dabei die erfindungsgemäße Vorrichtung zur Ausführung von Handhabungs- und/oder Fertigungsaufgaben innerhalb eines Teilprozesses. Der Prozessparameter ist dabei beispielsweise eine Kraft und/oder ein Moment, und/oder wird zum Beispiel während einer Bewegung des Roboters (zum Beispiel eines Roboterarms) erfasst.

Es ist ferner denkbar, dass die Weitergabe des Prozessdatenwertes für jeden Prozessdatenwert und/oder unabhängig von einem konkreten Wert des Prozessdatenwertes und/oder immer erfolgt. Mit anderen Worten werden die Prozessdatenwerte zum Beispiel immer weitergegeben und/oder gespeichert, auch wenn im Teilprozess, bei welchem die Prozessdatenwerte ermittelt werden, noch keine Auffälligkeiten festgestellt werden. Insbesondere erfolgt dabei eine Weitergabe des Prozessdatenwertes an die mindestens eine im Prozess vorgelagerte und/oder nachgelagerte Einzelmaschine, zum Beispiel durch die Schnittstellenvorrichtung, bevorzugt unabhängig davon, ob innerhalb des Teilprozesses (bei welchem der Prozessdatenwert ermittelt wird) eine Abweichung und/oder Auffälligkeit des ermittelten Prozessdatenwertes festgestellt wird. Somit können teilprozessübergreifend auch solche Prozessdatenwerte zur Bewertung des gesamten Prozesses herangezogen werden, welche bei der Ermittlung durch den Teilprozess noch nicht als relevant eingestuft wurden. Die Qualitätssicherung für den Prozess lässt sich damit deutlich verbessern.

Ebenfalls Gegenstand der Erfindung ist ein System für mindestens einen industriellen automatisierten Prozess, vorzugsweise einen Wäge- und/oder Abfüll- und/oder Anordnungsund/oder Verpackungsprozess, insbesondere zum Herstellen und/oder Verpacken von Säcken, umfassend:
- mindestens zwei Einzelmaschinen jeweils zur Durchführung eines jeweiligen Teilprozesses des gesamten Prozesses, wobei die Einzelmaschinen jeweils mindestens einen Sensor zur Ermittlung mindestens eines gesamtprozessrelevanten Prozessdatenwertes durch eine Erfassung mindestens eines jeweiligen gesamtprozessrelevanten Teilprozessparameters, insbesondere an der jeweiligen Einzelmaschine, aufweisen, und/oder
- mindestens eine Übertragungsvorrichtung zur Datenverbindung mit den jeweiligen Einzelmaschinen, vorzugweise zur Datenübertragung zwischen den Einzelmaschinen und/oder mit einer zentralen Verarbeitungsvorrichtung (wie einen Server), um den Prozessdatenwert teilprozessübergreifend bereitzustellen, insbesondere digital bereitzustellen, und/oder
- mindestens eine, insbesondere nicht-flüchtige, Datenspeichereinheit, insbesondere der Einzelmaschine und/oder der Übertragungsvorrichtung, zur dauerhaften Speicherung des Prozessdatenwertes,
wobei anhand des Prozessdatenwertes durch einen Vergleich mit einer vordefinierten Prozessvorgabe der gesamte Prozess bewertbar ist, und wobei zumindest eine der Einzelmaschinen als eine oben beschriebene Vorrichtung ausgeführt ist. Insbesondere dient dabei die (nicht-flüchtige) Datenspeichereinheit sowohl zur (insbesondere zentralen und/oder persistenten) Speicherung der Prozessvorgabe als auch zur (insbesondere zentralen und/oder persistenten) Speicherung des Prozessdatenwertes, wobei die Speicherung vorzugsweise bei jedem Teilprozess und/oder teilprozessübergreifend erfolgt. Besonders bevorzugt erfolgt eine Auswertung des Prozessdatenwertes und/oder der Vergleich bei jedem der Teilprozesse und/oder teilprozessübergreifend, zum Beispiel durch eine (einzige) zentrale Verarbeitungsvorrichtung. Die zentrale Verarbeitungsvorrichtung ist dabei beispielsweise ein Computer und/oder Server. Bevorzugt ist die zentrale Verarbeitungsvorrichtung über die Übertragungsvorrichtung mit den Einzelmaschinen verbunden, wobei die Übertragungsvorrichtung zum Beispiel als ein Netzwerk, insbesondere ein Internet und/oder Ethernet und/oder Local Area Network und/oder Datenbus und/oder Funknetz und/oder Kommunikationsnetz und/oder dergleichen, ausgeführt ist. Auch ist es denkbar, dass die Übertragungsvorrichtung Mobilfunkschnittstellen zur Verbindung mit einem Mobilfunknetz umfasst. Der Vergleich und/oder die Auswertung ermöglicht dabei insbesondere, dass der gesamte Prozess, das heißt zum Beispiel auch das gesamte (erfindungsgemäße) System zur Durchführung des Prozesses, durch den (zum Beispiel bei Teilprozessen ermittelten) Prozessdatenwert bewertbar ist. Damit bringt das erfindungsgemäße System die gleichen Vorteile mit sich, wie sie bereits ausführlich für eine erfindungsgemäße Vorrichtung beschrieben worden sind. Zudem kann es vorgesehen sein, dass zumindest eine der jeweiligen Einzelmaschinen des erfindungsgemäßen Systems als eine erfindungsgemäße Vorrichtung ausgeführt ist.

Es kann insbesondere vorgesehen sein, dass die Prozessvorgabe einmalig für einen oder mehrere (zum Beispiel unabhängige) Prozesse festgelegt wird, zum Beispiel durch einen einmaligen Testablauf. Im Testablauf wird zum Beispiel mindestens eine der Einzelmaschinen des erfindungsgemäßen Systems geprüft, zum Beispiel indem eine auf Paletten verpackte Ware mit einer Testmethode verarbeitet wird. Beispielsweise erfolgt bei dem Testablauf ein Beschleunigungstest der Ware und/oder des Produktes des Prozesses, wobei zum Beispiel eine Belastung von mindestens 0,1 G und/oder mindestens 0,2 G und/oder mindestens 0,5 G für mindestens 10 ms oder mindestens 100 ms oder mindestens 300 ms auf das Produkt und/oder die Ware ausgeübt wird, um zum Beispiel die Deformation zu prüfen und/oder zu messen (G beträgt dabei zum Beispiel ungefähr 9,81 m/s²). Die bei dem Testablauf ermittelten Prüfwerte werden dabei zum Beispiel einmalig in der Prozessvorgabe gespeichert. Insbesondere umfasst die Prozessvorgabe die Prüfwerte und/oder Vergleichswerte und/oder Randbedingungen (Grenzwerte) und/oder weitere Referenzdaten und/oder eine Rezeptur für das Produkt und/oder die Ware und/oder eine Folie des Prozesses. Vorzugsweise wird dabei durch die Prozessvorgabe definiert, was (gesamt) prozessrelevant ist, das heißt zum Beispiel welche Prozessparameter gesamtprozessrelevant sind, oder welche zum Beispiel relevant für die Qualitätssicherung und/oder die Ladungssicherheit sind. Insbesondere ist es somit möglich, anhand der Prozessvorgabe die zu ermittelnden Prozessparameter vorzugeben und/oder einzustellen und/oder den Prozess zu steuern und/oder den Prozess auszuwerten und/oder das Prozessergebnis zu überprüfen.

Es kann optional möglich sein, dass die Einzelmaschinen zumindest eine der folgenden Maschinen umfassen und/oder jeweils als eine der folgenden Maschinen ausgebildet sind, wobei sich die Einzelmaschinen vorzugsweise voneinander unterscheiden:
- einen Haubenstretcher, wobei insbesondere der zugehörige Teilprozessparameter, welcher insbesondere beim Haubenstretcher erfasst wird, ein Kraft/Weg-Verlauf beim Verstrecken einer Folie durch den Haubenstretcher ist,
- ein Palettierer, wobei insbesondere der zugehörige Teilprozessparameter, welcher insbesondere beim Palettierer erfasst wird, eine Kraft beim Verschieben eines Produktes (des Prozesses), insbesondere von Säcken, durch den Palettierer und/oder ein Gewicht und/oder eine Höhe der Palette des Palettierers ist,
- eine Füllmaschine, vorzugsweise eine Form-Fill-Seal-Maschine, wobei insbesondere der zugehörige Teilprozessparameter, welcher insbesondere bei der Füllmaschine erfasst wird, eine Kraft beim Weitertransport des Produktes und/oder eine Füllzeit und/oder eine Schüttdichte und/oder ein Gewicht des Produktes (des Prozesses) ist.

Der zugehörige Teilprozessparameter ist dabei insbesondere ein bei dem Teilprozess erfasster Teilprozessparameter an der jeweiligen Einzelmaschine des Teilprozesses. Mit anderen Worten wird zum Beispiel der dem Haubenstretcher zugehörige Teilprozessparameter, zum Beispiel der Kraft/Weg-Verlauf, am Haubenstretcher erfasst und/oder der dem Palettierer zugehörige Teilprozessparameter, zum Beispiel die Kraft, am Palettierer erfasst und/oder der der Füllmaschine zugehörige Teilprozessparameter, zum Beispiel eine Kraft, an der Füllmaschine erfasst. Insbesondere ist dabei der zugehörige Teilprozessparameter ein Gewicht der Produkte, zum Beispiel der Säcke. Vorzugsweise ist dabei das Produkt als ein Packstück und/oder als ein Sack ausgeführt, welches zum Beispiel durch den Palettierer zusammengefasst und/oder positioniert und/oder angeordnet wird.

Ebenfalls Gegenstand der Erfindung ist ein Verfahren für eine Bewertung, insbesondere zur Qualitätssicherung, bei mindestens einem industriellen (zumindest teil-) automatisierten Prozess, vorzugsweise einem Wäge- und/oder Abfüll- und/oder Anordnungs- und/oder Verpackungsprozess, insbesondere zum Herstellen und/oder Verpacken von Säcken, durchgeführt in einem oben beschriebenen System. Der Anordnungsprozess ist dabei beispielsweise ein Palettierungsprozess. Insbesondere umfasst dabei der gesamte Prozess, das heißt insbesondere der mindestens eine industrielle automatisierte Prozess, zumindest zwei Teilprozesse. Weiter ist vorzugsweise eine Prozessvorgabe, insbesondere teilprozessübergreifend, definiert. Die Prozessvorgabe weist bevorzugt mindestens einen Vergleichswert für mindestens einen gesamtprozessrelevanten Prozessdatenwert auf, welcher für den gesamten Prozess relevant ist.

Hierbei ist insbesondere vorgesehen, dass die nachfolgenden Schritte durchgeführt werden, vorzugsweise zeitlich nacheinander oder in beliebiger Reihenfolge:
a) Ermitteln des mindestens einen gesamtprozessrelevanten Prozessdatenwertes, insbesondere jeweils durch die Einzelmaschinen, bei mindestens einem vorgelagerten Teilprozess des (gesamten) Prozesses und/oder bei einem nachgelagerten Teilprozess des (gesamten) Prozesses, durch eine Erfassung mindestens eines gesamtprozessrelevanten Teilprozessparameters einer oben beschriebenen Vorrichtung ermittelt wird, wobei der Teilprozessparameter eine Messgröße an der Vorrichtung ist. Insbesondere ist hierbei der nachgelagerte Teilprozess dem mindestens einen vorgelagerten Teilprozess nachgelagert, sodass beispielsweise ein Teilprozessergebnis des vorgelagerten Teilprozesses an den nachgelagerten Teilprozess übergeben wird und/oder das Teilprozessergebnis des nachgelagerten Teilprozesses einem Gesamtprozessergebnis entspricht,
b) Plausibilisieren des Prozessdatenwertes, insbesondere bei dem / durch den nachgelagerten Teilprozess, außerhalb des vorgelagerten Teilprozesses, derart, dass der Prozessdatenwert mit dem jeweiligen Vergleichswert verglichen wird, vorzugsweise dem zugehörigen Vergleichswert, wodurch ein für den gesamten Prozess spezifisches Bewertungsergebnis bestimmt wird, wobei anhand des Bewertungsergebnisses der vorgelagerte Teilprozess bewertet wird. Dies führt insbesondere dazu, dass anhand des Prozessdatenwertes, welcher für den gesamten Prozess relevant ist, eine teilprozessübergreifende - und damit insbesondere auch für den gesamten Prozess spezifische - Bewertung erfolgen kann, und wobei ein dauerhaftes Speichern des Bewertungsergebnisses und/oder des Prozessdatenwertes in einer Prozessaufzeichnung erfolgt.

Unter der für den gesamten Prozess spezifischen Bewertung wird insbesondere verstanden, dass anhand des Prozessdatenwertes durch den Vergleich mit der vordefinierten Prozessvorgabe der gesamte Prozess bewertbar, und somit vorzugsweise anhand der Bewertung eine Aussage über den gesamten Prozess erfolgen kann (z. B. über Fehler, welche sich auf das Ergebnis bzw. Produkt des Gesamt-Prozesses auswirken, und/oder teilprozessübergreifende Fehler, welche auch über den Fehlerursprung in einem Teilprozess hinaus Einfluss auf weitere Teilprozesse haben). Insbesondere kann es möglich sein, dass anhand der Plausibilisierung auch der Ursprung des Fehlers erfasst werden kann, indem z. B. ein "Fingerabdruck" einer Abweichung des Prozessdatenwerts zum Vergleichswert erfasst wird, welcher charakteristisch für einen bestimmten Teilprozess (z. B. dem vorgelagerten Teilprozess) ist.

Das erfindungsgemäße Verfahren bringt damit die gleichen Vorteile mit sich, wie sie bereits ausführlich mit Bezug auf eine erfindungsgemäße Vorrichtung und/oder ein erfindungsgemäßes System beschrieben worden sind. Zudem kann das erfindungsgemäße Verfahren geeignet sein, eine erfindungsgemäße Vorrichtung und/oder ein erfindungsgemäßes System zu betreiben.

Vorzugsweise kann es vorgesehen sein, dass das Bewertungsergebnis zumindest eine Empfehlung und/oder eine Abweichungsinformation für eine Einstellung der Prozessparameter im (zum Beispiel vorgelagerten) Teilprozess umfasst. Vorzugsweise sind dabei die gesamtprozessrelevanten Prozessdatenwerte als nachfolgeprozessrelevante Prozessdatenwerte ausgeführt, das heißt sind insbesondere für zumindest einen der nachgelagerten (Nachfolge-) Teilprozesse relevant und/oder für den vorgelagerten Teilprozess irrelevant. Daher werden zum Beispiel die nachfolgeprozessrelevanten Prozessdatenwerte an die Nachfolgeteilprozesse weitergeleitet. Insbesondere ist es durch das Plausibilisieren dabei möglich, den Prozessdatenwert, zum Beispiel als Ist-Wert, mit dem Vergleichswert, zum Beispiel als Soll-Wert, zu vergleichen. Dies ermöglicht zum Beispiel eine lückenlose Überwachung und/oder Dokumentierung der gesamten Prozesskette, insbesondere hinsichtlich der Übereinstimmung mit der Prozessvorgabe und/oder mit vorgespeicherten Randbedingungen der Prozessvorgabe, vorzugsweise um die Ladungssicherheit zum Beispiel eines Produktes oder einer Ware des gesamten Prozesses und/oder des Gesamtprozessergebnisses zu gewährleisten und/oder nachweisen zu können.

Es ist ferner denkbar, dass ein dauerhaftes Speichern des Bewertungsergebnisses und/oder des Prozessdatenwertes zentral für einen Bediener und/oder zentral / übergreifend für sämtliche Teilprozesse des Prozesses und/oder verschlüsselt in einer Prozessaufzeichnung erfolgt. Insbesondere kann es vorgesehen sein, dass die Schritte a) und/oder b) (neben dem Prozess als ersten Prozess) für weitere Prozesse durchgeführt werden, welche sich insbesondere voneinander (und von dem ersten Prozess) unterscheiden, wobei insbesondere jeweils eine spezifische Prozessaufzeichnung erfolgt, und bevorzugt zusätzlich eine prozessspezifische Information, insbesondere zur Identifizierung des jeweiligen Prozesses, insbesondere dauerhaft in der Prozessaufzeichnung gespeichert wird. Die Prozessaufzeichnung ist dabei vorzugsweise als Logbuch ausgeführt, und dient insbesondere zur dauerhaften und/oder teilprozessübergreifenden Speicherung des Bewertungsergebnisses und/oder des Prozessdatenwertes. Bevorzugt umfasst dabei der Prozessdatenwert und/oder das Bewertungsergebnis, welcher / welches bei einem bestimmten Teilprozess ermittelt wurde, einen (zum Beispiel digitalen) Fingerabdruck, welcher für das dem bestimmten Teilprozess und/oder der Einzelmaschine des bestimmten Teilprozesses zugeführte Material spezifisch ist. Mit anderen Worten lassen die an der Einzelmaschine des Teilprozesses ermittelten und anschließend gespeicherten Prozessdatenwerte Rückschlüsse zu, inwieweit die Verarbeitung an der jeweiligen Einzelmaschine oder der dieser Einzelmaschine vorgelagerten weiteren Einzelmaschinen (der vorgelagerten Teilprozesse) fehlerhaft und/oder abweichend war. So lassen sich beispielsweise Abweichungen, zum Beispiel durch Fehler des Produktes und/oder der Materialien, zum Beispiel aufgrund falscher Granulate und/oder falscher Folien und/oder anderer Folieneigenschaften, durch die Plausibilisierung (Plausibilitätsprüfung) identifizieren.

Vorteilhaft ist es zudem, wenn ein Produkt des nachgelagerten Teilprozesses, insbesondere als ein Endprodukt des (Gesamt-) Prozesses, mit einem Identifikator, vorzugsweise einem maschinenlesbaren Code, versehen wird, welcher vorzugsweise Informationen über eine Prozessaufzeichnung aufweist und/oder in Abhängigkeit von der Prozessaufzeichnung erstellt wird. Insbesondere umfasst dabei der Identifikator eine prozessspezifische Information, anhand der sich der konkrete Prozess, in welchem die Prozessaufzeichnung erfolgt ist, identifizieren lässt. Das Endprodukt ist dabei insbesondere ein (Gesamt-) Prozessendprodukt, zum Beispiel die fertige Palette und/oder die verpackte Ware. Insbesondere umfasst der Identifikator eine Seriennummer, sodass sich zum Beispiel beim Auftreten eines Mangels die dem Prozess zugehörigen Prozessdatenwerte ermitteln lassen. Der maschinenlesbare Code ist dabei beispielsweise ein QR- ("Quick Response") Code oder dergleichen.

Vorzugsweise kann vorgesehen sein, dass der Vergleichswert oder die Vergleichswerte und/oder die Prozessvorgabe mindestens einen Wertebereich definieren, wobei ein Warnablauf eingeleitet wird, wenn gemäß dem Plausibilisieren eine Abweichung des Prozessdatenwertes zum Wertebereich festgestellt wird, wobei vorzugsweise der Warnablauf eine Anzeige eines Hinweises an einen Bediener des nachgelagerten Teilprozesses umfasst. Alternativ oder zusätzlich kann es möglich sein, dass der Hinweis und/oder die Initiierung des Warnablaufs bei dem Teilprozess erfolgt, bei welchem die Plausibilisierung und/oder Abweichung festgestellt wurde. Dies ermöglicht es dem Bediener, die Durchführung des Prozesses derart anzupassen, dass die Qualität des Prozessergebnisses gesichert wird.

Ein weiterer Vorteil im Rahmen der Erfindung ist erzielbar, wenn ein jeweiliger Teilprozess von jeweils mindestens einer Einzelmaschine (zumindest teilweise) ausgeführt wird, wobei vorzugsweise in jedem der Teilprozesse mindestens ein für den jeweiligen Teilprozess spezifischer gesamtprozessrelevanter Prozessdatenwert ermittelt wird, insbesondere durch eine Erfassung zumindest eines gesamtprozessrelevanten Teilprozessparameters an bzw. der jeweiligen Einzelmaschine, wobei vorzugsweise der mindestens eine Prozessdatenwert mindestens einen Messwert und/oder einen Messwerteverlauf umfasst. Insbesondere ist der Prozessdatenwert dadurch gesamtprozessrelevant, dass der Prozessdatenwert für einen Einfluss auf das Produkt und/oder die Ware des Prozesses und/oder auf den gesamten Prozess spezifisch (z. B. davon abhängig) ist, welcher insbesondere das Gesamtprozessergebnis beeinflusst. Somit kann die ausreichende Qualität des gesamten Prozesses überwacht und/oder bewertet werden.

Des Weiteren kann vorgesehen sein, dass der Prozessdatenwert durch die Erfassung eines materialspezifischen und/oder einzelmaschinenspezifischen und/oder produktspezifischen und/oder zulieferungsprozessspezifischen gesamtprozessrelevanten Teilprozessparameter ermittelt wird. Der einzelmaschinenspezifische Teilprozessparameter bezieht sich dabei insbesondere auf Parameter und/oder Messgrößen an der Einzelmaschine des Teilprozesses. Der materialspezifische Teilprozessparameter bezieht sich dabei insbesondere auf die Eigenschaften und/oder die Art des Materials und/oder der Rohstoffe, welche dem jeweiligen Teilprozess und/oder dem Gesamtprozess zugeführt werden. Die produktspezifischen Teilprozessparameter beziehen sich dabei insbesondere auf eine Rezeptvorgabe und/oder Rezeptur zur Herstellung des Produktes des Prozesses, wie zum Beispiel eine Dicke und/oder eine Breite des Produktes. Die zulieferungsprozessspezifischen Teilprozessparameter beziehen sich insbesondere auf die zuliefernden Prozesse des Gesamtprozesses, wie zum Beispiel die Zulieferung von Folie und/oder Rohstoffe und/oder Absackware. Vorteilhaft ist hierbei insbesondere, dass alle für die Prozessergebnisqualität, zum Beispiel die Ladungssicherheit, relevanten Informationen bewertet werden können.

Vorteilhafterweise kann bei der Erfindung vorgesehen sein, dass das Plausibilisieren lernfähig durchgeführt wird, vorzugsweise dadurch, dass ein Warnablauf bei Bestimmung eines negativen Bewertungsergebnisses initiiert wird, sodass eine Bedienereingabe zur Anpassung des Vergleichswerts angefordert und/oder ausgewertet wird. Insbesondere umfasst die Bedienereingabe dabei eine Eingabe an der Einzelmaschine. Es kann insbesondere vorgesehen sein, dass eine Warnung und/oder eine Aufforderung an einen Bediener der Einzelmaschine ausgegeben wird, wenn eine Abweichung bei der Plausibilisierung festgestellt wird, wobei insbesondere der Bediener diese Abweichung hierdurch bewerten kann. Somit kann das Ergebnis der Plausibilisierung verbessert werden.

Optional ist es denkbar, dass die Speicherung und/oder eine Weitergabe des Prozessdatenwertes, insbesondere durch eine Datenübertragung über eine Übertragungsvorrichtung, insbesondere von einer vorgelagerten Einzelmaschine des vorgelagerten Teilprozesses an eine nachgelagerte Einzelmaschine des nachgelagerten Teilprozesses, verschlüsselt und/oder fälschungssicher und/oder sicherheitszertifiziert erfolgt. Der Einsatz von Verschlüsselungstechniken und/oder eines Zertifikats ermöglicht es dabei, einen ordnungsgemäßen Prozessablauf auch nachträglich für ein bestimmtes Produkt des Prozesses sicher und zuverlässig nachweisen zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Systems,
- Fig. 2: eine schematische Darstellung einer erfindungsgemäßen Vorrichtung, und
- Fig. 3: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

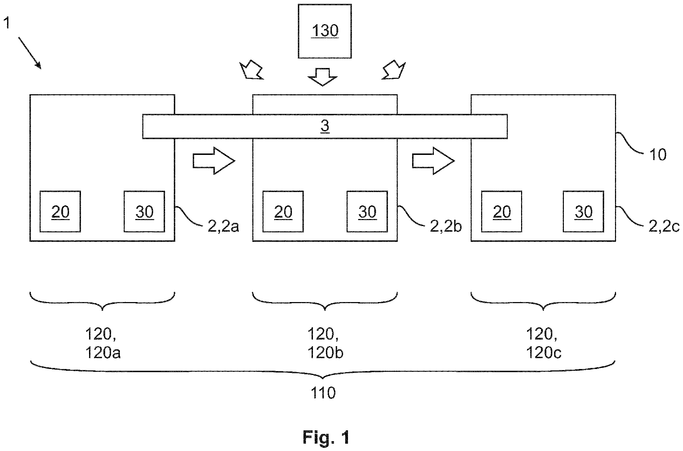

In Fig. 1 ist schematisch ein erfindungsgemäßes System 1 dargestellt, wobei ein gesamter Prozess 110 dargestellt ist. Der gesamte Prozess 110 umfasst dabei beispielsweise mehrere Teilprozesse 120, zum Beispiel einen ersten (vorgelagerten) Teilprozess 120a, einen zweiten (vorgelagerten) Teilprozess 120b und/oder einen dritten (beziehungsweise ersten nachgelagerten) Teilprozess 120c. In jedem dieser Teilprozesse 120 ist dabei mindestens eine Einzelmaschine 2 vorgesehen, welche zum Beispiel als erfindungsgemäße Vorrichtung 10 ausgeführt sein kann. So kann beispielsweise eine erste (vorgelagerte) Einzelmaschine 2a als eine Füllmaschine, eine zweite (vorgelagerte) Einzelmaschine 2b als ein Palettierer und/oder eine dritte (nachgelagerte) Einzelmaschine 2c als ein Haubenstretcher ausgeführt sein. Insbesondere ist in jedem Teilprozess 120 und/oder bei jeder Einzelmaschine 2 eine Ermittlung mindestens eines gesamtprozessrelevanten Prozessdatenwertes durch eine Erfassung mindestens eines gesamtprozessrelevanten Teilprozessparameters der jeweiligen Einzelmaschine 2 und/oder erfindungsgemäßen Vorrichtung 10 möglich. Hierzu umfasst zumindest eine oder jede Einzelmaschine 2 zumindest einen Sensor 30. Insbesondere umfasst zumindest eine oder jede Einzelmaschine 2 zumindest eine Datenspeichereinheit 20, um die ermittelten Prozessdatenwerte zum Beispiel dauerhaft zu speichern. Zur Übertragung der Prozessdatenwerte ist ferner eine Übertragungsvorrichtung 3 vorgesehen, welche zum Beispiel als Netzwerk und/oder als Funkübertragungssystem ausgeführt ist. Teilprozessübergreifend, das heißt sowohl für einen ersten Teilprozess 120a als auch für einen zweiten Teilprozess 120b als auch für einen dritten Teilprozess 120c, ist eine (einzige) Prozessvorgabe 130 vorgesehen und/oder definiert.

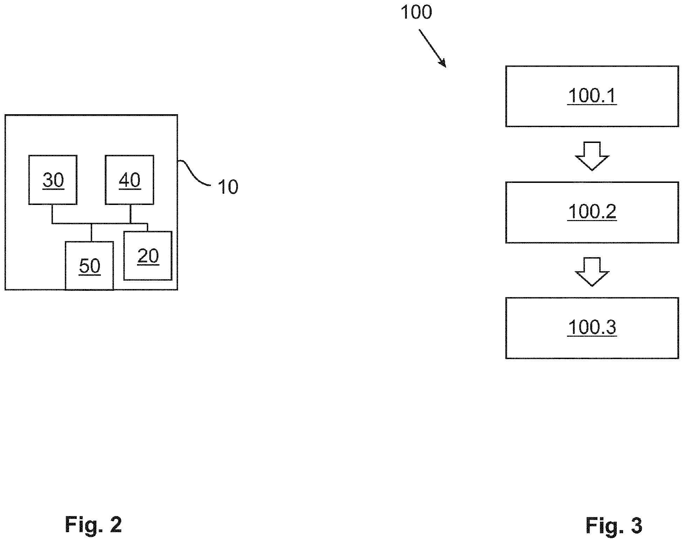

In Fig. 2 ist eine erfindungsgemäße Vorrichtung 10 näher dargestellt. Dabei kann die erfindungsgemäße Vorrichtung 10 zum Beispiel einen Sensor 30 und/oder eine Verarbeitungsvorrichtung 40 zur Verarbeitung der Prozessdatenwerte und/oder eine Schnittstellenvorrichtung 50 zur Verbindung mit weiteren erfindungsgemäßen Vorrichtungen 10 und/oder Einzelmaschinen 2 aufweisen. Weiter ist insbesondere auch eine Datenspeichereinheit 20 vorgesehen, wobei die Datenspeichereinheit 20 zum Beispiel elektrisch mit dem Sensor 30 und/oder der Verarbeitungsvorrichtung 40 und/oder der Schnittstellenvorrichtung 50 verbunden ist, zum Beispiel auf einer nicht dargestellten Platine der erfindungsgemäßen Vorrichtung 10.

Fig. 3 visualisiert schematisch ein erfindungsgemäßes Verfahren 100. Dabei wird gemäß einem ersten Verfahrensschritt 100.1 mindestens ein gesamtprozessrelevanter Prozessdatenwert bei mindestens einem vorgelagerten Teilprozess 120a, 120b des (gesamten) Prozesses 110 ermittelt. Gemäß einem zweiten Verfahrensschritt 100.2 wird alternativ oder zusätzlich zum ersten Verfahrensschritt 100.1 der gesamtprozessrelevante Prozessdatenwert bei einem nachgelagerten Teilprozess 120c des Prozesses 110 ermittelt. Gemäß einem dritten Verfahrensschritt 100.3 erfolgt ein Plausibilisieren des ermittelten Prozessdatenwertes außerhalb des vorgelagerten Teilprozesses 120a, 120b, insbesondere derart, dass der Prozessdatenwert mit einem jeweiligen Vergleichswert der Prozessvorgabe 130 verglichen wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: System
- 2: Einzelmaschine
- 2a: erste / vorgelagerte Einzelmaschine
- 2b: zweite / vorgelagerte Einzelmaschine
- 2c: nachgelagerte Einzelmaschine, dritte Einzelmaschine

- 3: Übertragungsvorrichtung

- 10: Vorrichtung

- 20: Datenspeichereinheit

- 30: Sensor

- 40: Verarbeitungsvorrichtung

- 50: Schnittstellenvorrichtung

- 100: Verfahren
- 100.1: erster Verfahrensschritt
- 100.2: zweiter Verfahrensschritt
- 100.3: dritter Verfahrensschritt

- 110: Prozess, Gesamtprozess

- 120: Teilprozess
- 120a: erster / vorgelagerter Teilprozess
- 120b: zweiter / vorgelagerter Teilprozess
- 120c: erster nachgelagerter Teilprozess, dritter Teilprozess

- 130: Prozessvorgabe

### Bezuaszeichenliste

- 1: System
- 2: Einzelmaschine
- 2a: erste / vorgelagerte Einzelmaschine
- 2b: zweite / vorgelagerte Einzelmaschine
- 2c: nachgelagerte Einzelmaschine, dritte Einzelmaschine

- 3: Übertragungsvorrichtung

- 10: Vorrichtung

- 20: Datenspeichereinheit

- 30: Sensor

- 40: Verarbeitungsvorrichtung

- 50: Schnittstellenvorrichtung

- 100: Verfahren
- 100.1: erster Verfahrensschritt
- 100.2: zweiter Verfahrensschritt
- 100.3: dritter Verfahrensschritt

- 110: Prozess, Gesamtprozess

- 120: Teilprozess
- 120a: erster / vorgelagerter Teilprozess
- 120b: zweiter / vorgelagerter Teilprozess
- 120c: erster nachgelagerter Teilprozess, dritter Teilprozess

- 130: Prozessvorgabe

## Patentansprüche

1. Vorrichtung (10), angepasst zum Verwenden in einem System (1), angepasst zur Durchführung mindestens eines industriellen automatisierten Prozesses (110), nämlich einen Wäge- und/oder Abfüll- und/oder Anordnungs- und/oder Verpackungsprozess, wobei der gesamte Prozess (110) zumindest zwei Teilprozesse (120) umfasst,
wobei die Vorrichtung eine Einzelmaschine (2) des Systems (1) darstellt,
und wobei teilprozessübergreifend eine Prozessvorgabe (130) vordefiniert ist, welche mindestens einen Vergleichswert für mindestens einen gesamtprozessrelevanten Prozessdatenwert aufweist,
die Vorrichtung (10) aufweisend:
- eine Datenspeichereinheit (20) zur dauerhaften Speicherung des mindestens einen gesamtprozessrelevanten Prozessdatenwertes,
- mindestens einen Sensor (30) zur Ermittlung des mindestens einen gesamtprozessrelevanten Prozessdatenwertes, welcher für den gesamten Prozess relevant ist, durch eine Erfassung mindestens eines gesamtprozessrelevanten Teilprozessparameters der Vorrichtung (10), wobei der Teilprozessparameter eine Messgröße an der Vorrichtung (10) ist,
- eine Verarbeitungsvorrichtung (40), welche zur Verarbeitung des Prozessdatenwertes mit dem Sensor (30) elektrisch verbunden ist,
- eine Schnittstellenvorrichtung (50) zur Datenverbindung und zur Weitergabe des Prozessdatenwertes an mindestens eine im Prozess (110) vorgelagerte und/oder nachgelagerte Einzelmaschine (2a, 2b, 2c),
wobei die Vorrichtung (10) angepasst ist, einen Vergleich des Prozessdatenwertes mit der vordefinierten Prozessvorgabe (130) durchzuführen um den gesamten Prozess (110) zu bewerten.

2. Vorrichtung (10) nach Anspruch 1,
**dadurch gekennzeichnet,**
**dass** die Vorrichtung (10) eine nicht-flüchtige Datenspeichereinheit (20) aufweist, um den ermittelten Prozessdatenwert dauerhaft, zu speichern, und/oder dass die Vorrichtung (10) als eine industrielle Maschine und/oder als ein Roboter ausgeführt ist.

3. System (1) angepasst zur Durchführung mindestens eines industriellen automatisierten Prozesses (110), nämlich einen Wäge- und/oder Abfüll- und/oder Anordnungs- und/oder Verpackungsprozess, insbesondere zum Herstellen und/oder Verpacken von Säcken, das System (1) umfassend:
- mindestens zwei Einzelmaschinen (2) jeweils zur Durchführung eines jeweiligen Teilprozesses (120) des gesamten Prozesses (110), wobei die Einzelmaschinen (2) jeweils mindestens einen Sensor (30) zur Ermittlung mindestens eines gesamtprozessrelevanten Prozessdatenwertes durch eine Erfassung mindestens eines jeweiligen gesamtprozessrelevanten Teilprozessparameters aufweisen,
- mindestens eine Übertragungsvorrichtung (3) zur Datenverbindung mit den jeweiligen Einzelmaschinen (2), um den Prozessdatenwert teilprozessübergreifend bereitzustellen, wobei zumindest eine der Einzelmaschinen (2) als eine Vorrichtung (10) nach einem der Ansprüche 1 bis 2 ausgeführt ist.

4. System (1) nach Anspruch 3,
**dadurch gekennzeichnet,**
**dass** die Einzelmaschinen (2) zumindest eine der folgenden Maschinen umfassen:
- einen Haubenstretcher, wobei insbesondere der zugehörige Teilprozessparameter ein Kraft/Weg-Verlauf beim Verstrecken einer Folie durch den Haubenstretcher ist,
- ein Palettierer, wobei insbesondere der zugehörige Teilprozessparameter eine Kraft beim Verschieben eines Produktes, insbesondere von Säcken, durch den Palettierer und/oder ein Gewicht und/oder eine Höhe der Palette des Palettierers ist,
- eine Füllmaschine, vorzugsweise eine Form-Fill-Seal-Maschine, wobei insbesondere der zugehörige Teilprozessparameter eine Kraft beim Weitertransport des Produktes und/oder eine Füllzeit und/oder eine Schüttdichte und/oder ein Gewicht des Produktes ist.

5. Verfahren (100) für eine Bewertung bei mindestens einem industriellen automatisierten Prozess (110), nämlich einem Wäge- und/oder Abfüll- und/oder Anordnungs- und/oder Verpackungsprozess, insbesondere zum Herstellen und/oder Verpacken von Säcken, durchgeführt in einem System (1) nach Anspruch 3 oder 4,
wobei der gesamte Prozess (110) zumindest zwei Teilprozesse (120) umfasst,
wobei teilprozessübergreifend eine Prozessvorgabe (130) vordefiniert ist, welche mindestens einen Vergleichswert für mindestens einen gesamtprozessrelevanten Prozessdatenwert aufweist, welcher für den gesamten Prozess (110) relevant ist,
**gekennzeichnet durch die nachfolgenden Schritte,**
a) Ermitteln des mindestens einen gesamtprozessrelevanten Prozessdatenwertes bei mindestens einem vorgelagerten Teilprozess (120a, 120b) und/oder bei einem nachgelagerten Teilprozess (120c) durch eine Erfassung mindestens eines gesamtprozessrelevanten Teilprozessparameters einer Vorrichtung (10) nach einem der Ansprüche 1 bis 2 ermittelt wird, wobei der Teilprozessparameter eine Messgröße an der Vorrichtung (10) ist,
b) Plausibilisieren des ermittelten Prozessdatenwertes außerhalb des vorgelagerten Teilprozesses (120a, 120b) derart, dass der Prozessdatenwert mit dem Vergleichswert verglichen wird, wodurch ein für den gesamten Prozess (110) spezifisches Bewertungsergebnis bestimmt wird, wobei anhand des Bewertungsergebnisses der vorgelagerte Teilprozess (120a, 120b) bewertet wird,
wobei ein dauerhaftes Speichern des Bewertungsergebnisses und/oder des Prozessdatenwertes in einer Prozessaufzeichnung erfolgt.

6. Verfahren (100) nach Anspruch 5,
**dadurch gekennzeichnet,**
**dass** ein dauerhaftes Speichern des Bewertungsergebnisses und/oder des Prozessdatenwertes zentral für sämtliche Teilprozesse (120) des Prozesses in einer Prozessaufzeichnung erfolgt.

7. Verfahren (100) nach Anspruch 5 oder 6,
**dadurch gekennzeichnet,**
**dass** ein Produkt des nachgelagerten Teilprozesses (120c), insbesondere als ein Endprodukt des gesamten Prozesses (110), mit einem Identifikator, vorzugsweise einem maschinenlesbaren Code, versehen wird, welcher vorzugsweise Informationen über eine Prozessaufzeichnung aufweist und/oder in Abhängigkeit von der Prozessaufzeichnung erstellt wird.

8. Verfahren (100) nach einem der Ansprüche 5 bis 7,
**dadurch gekennzeichnet,**
**dass** der mindestens eine Vergleichswert mindestens einen Wertebereich definieren, wobei ein Warnablauf eingeleitet wird, wenn gemäß dem Plausibilisieren eine Abweichung des Prozessdatenwertes im Vergleich mit dem Wertebereich festgestellt wird, wobei vorzugsweise der Warnablauf einen Hinweis an einen Bediener des nachgelagerten Teilprozesses (120c) umfasst.

9. Verfahren (100) nach einem der Ansprüche 5 bis 8,
**dadurch gekennzeichnet,**
**dass** jeder Teilprozess (120) von jeweils mindestens einer dem jeweiligen Teilprozess (120) zugeordneten Einzelmaschine (2) ausgeführt wird, wobei bei jedem Teilprozess (120) mindestens ein für den jeweiligen Teilprozess (120) spezifischer gesamtprozessrelevanter Prozessdatenwert ermittelt wird, insbesondere durch eine Erfassung zumindest eines gesamtprozessrelevanten Teilprozessparameters der jeweiligen Einzelmaschine (2), wobei vorzugsweise der mindestens eine Prozessdatenwert mindestens einen Messwert und/oder einen Messwerteverlauf umfasst.

10. Verfahren (100) nach einem der Ansprüche 5 bis 9,
**dadurch gekennzeichnet,**
**dass** der Prozessdatenwert durch eine Erfassung eines materialspezifischen und/oder einzelmaschinenspezifischen und/oder produktspezifischen und/oder zulieferungsprozessspezifischen gesamtprozessrelevanten Teilprozessparameters ermittelt wird.

11. Verfahren (100) nach einem der Ansprüche 5 bis 10,
**dadurch gekennzeichnet,**
**dass** das Plausibilisieren lernfähig durchgeführt wird, vorzugsweise dadurch, dass ein Warnablauf bei Bestimmung eines negativen Bewertungsergebnisses initiiert wird, sodass eine Bedienereingabe zur Anpassung des Vergleichswerts angefordert und/oder ausgewertet wird.

12. Verfahren (100) nach einem der Ansprüche 5 bis 11,
**dadurch gekennzeichnet,**
**dass** eine Speicherung und/oder eine Weitergabe des Prozessdatenwertes, insbesondere durch eine Datenübertragung über eine Übertragungsvorrichtung (3), insbesondere von einer vorgelagerten Einzelmaschine (2a, 2b) des vorgelagerten Teilprozesses (120a, 120b) an eine nachgelagerte Einzelmaschine (2c) des nachgelagerten Teilprozesses (120c), verschlüsselt und/oder fälschungssicher und/oder sicherheitszertifiziert erfolgt.

13. Verfahren (100) nach einem der Ansprüche 5 bis 12,
**dadurch gekennzeichnet,**
**dass** der Prozessdatenwert bei dem vorgelagerten Teilprozess (120a, 120b) ermittelt wird, wobei der nachgelagerte Teilprozess (120c) das Plausibilisieren des beim vorgelagerten Teilprozess (120a, 120b) ermittelten Prozessdatenwertes durchführt, sodass insbesondere in Abhängigkeit von dem beim vorgelagerten Teilprozess (120a, 120b) ermittelten Prozessdatenwert eine nachgelagerte Einzelmaschine (2c) des nachgelagerten Teilprozesses (120c) angesteuert wird.

14. Verfahren (100) nach einem der Ansprüche 5 bis 13,
**dadurch gekennzeichnet,**
**dass** zumindest eine Einzelmaschine (2) zur Durchführung eines der Teilprozesse (120) vorgesehen ist, die gemäß einer Vorrichtung (10) nach einem der Ansprüche 1 oder 2 ausgestaltet ist, und/oder dass ein System (1) nach einem der Ansprüche 3 oder 4 betreibbar ist.

## Claims

1. A device (10), adapted for use in a system (1), adapted for carrying out at least one industrial automated process (110), namely a weighing and/or filling and/or arranging and/or packing process, wherein the entire process (110) comprises at least two partial processes (120),
wherein the device constitutes an individual machine (2) of the system (1),
and wherein a process specification (130) is pre-defined across partial processes, which has had least one comparison value for at least one process data value relevant to the entire process,
the device (10) having:
- A data storage unit (20) for permanent storage of the at least one process data value relevant to the entire process,
- at least one sensor (30) for determining the at least one process data value relevant to the entire process, which is relevant to the entire process, by detecting at least one partial process parameter of the device (10) relevant to the entire process, wherein the partial process parameter is a measured variable on the device (10),
- a processing device (40), which is electrically connected to the sensor (30) for processing the process data value,
- an interface device (50) for the data connection and for forwarding the process data value to at least one individual machine (2a, 2b, 2c) located upstream and/or downstream in the process (110),
wherein the device (10) is adapted to carry out a comparison of the process data value with the pre-defined process specification (130) in order to evaluate the entire process (110).

2. The device (10) according to claim 1,
**characterized in**
**that** the device (10) has a non-volatile, data storage unit (20) in order to store the determined process data value permanently, and/or that the device (10) is designed as an industrial machine and/or as a robot.

3. A system (1) adapted to carry out at least one industrial automated process (110), namely a weighing and/or filling and/or arranging and/or packing process, in particular for producing and/or packing bags, the system (1) comprising:
- At least two individual machines (2) each for carrying out a respective partial process (120) of the entire process (110), wherein the individual machines (2) each have at least one sensor (30) for determining at least one process data value relevant to the entire process by detecting at least one respective partial process parameter relevant to the entire process,
- at least one transmission device (3) for the data connection to the respective individual machines (2) in order to provide the process data value across partial processes,
wherein at least one of the individual machines (2) is designed as a device (10) according to any one of claim 1 to 2.

4. The system (1) according to claim 3,
**characterized in**
**that** the individual machines (2) comprise at least one of the following machines:
- a hood stretcher, wherein in particular the associated partial process parameter is a force/path progression when a film is stretched by the hood stretcher,
- a palletizer, wherein in particular the associated partial process parameter is a force during the displacement of a product, in particular of bags, by the palletizer and/or a weight and/or a height of the pallet of the palletizer,
- a filling machine, preferably a form-fill-seal machine, wherein in particular the associated partial process parameter is a force during the further transport of the product and/or a filling time and/or a bulk density and/or a weight of the product.

5. A method (100) for an evaluation in at least one industrial automated process (110), namely a weighing and/or filling and/or arranging and/or packing process, in particular for producing and/or packing bags, carried out in a system (1) according to claim 3 or 4,
wherein the entire process (110) comprises at least two partial processes (120), wherein a process specification (130) across partial processes is pre-defined, which has at least one comparison value for at least one process data value relevant to the entire process, which is relevant to the entire process (110),
**characterized by the following steps,**
a) determining the at least one process data value relevant to the entire process in at least one upstream partial process (120a, 120b) and/or in a downstream partial process (120c) by detecting at least one partial process parameter relevant to the entire process of a device (10) according to any one of claims 1 to 2, wherein the partial process parameter is a measured variable on the device (10),
b) checking the plausibility of the determined process data value outside of the upstream partial process (120a, 120b) in such a manner that the process data is compared with the comparison value, as a result of which a specific evaluation result for the entire process (110) is determined, wherein the upstream partial process (120a, 120b) is evaluated on the basis of the evaluation result.
wherein the evaluation result and/or the process data value is stored permanently.

6. The method (100) according to claim 5,
**characterized in**
**that** the evaluation result and/or of the process data value is permanently stored centrally for all partial processes (120) of the process in a process recording.

7. The method (100) according to claims 5 or 6,
**characterized in**
**that** a product of the downstream partial process (120c), in particular as an end product of the entire process (110), is provided with an identifier, preferably a machine-readable code, which preferably has information on a process recording and/or is created as a function of the process recording.

8. The method (100) according to any one of claims 5 to 7,
**characterized in**
**that** the at least one comparison value defines at least one value range, wherein a warning sequence is initiated if, according to the plausibility check, a deviation of the process data value is determined in comparison with the value range, wherein preferably the warning sequence comprises a note to an operator of the downstream partial process (120c).

9. The method (100) according to any one of claims 5 to 8,
**characterized in**
**that** each partial process (120) is executed by at least one individual machine (2) assigned to the respective partial process (120), wherein at least one process data value relevant to the respective partial process (120) specific to the respective partial process (120) is determined for each partial process (120),, in particular by detecting at least one partial process parameter relevant to the entire process of the respective individual machine (2), wherein preferably the at least one process data value comprises at least one measured value and/or one measured value progression.

10. The method (100) according to any one of claims 5 to 9,
**characterized in**
**that** the process data value is determined by detecting a material-specific and/or individual-machine-specific and/or product-specific and/or delivery-process-specific partial process parameter relevant to the entire process.

11. The method (100) according to any one of claims 5 to 10,
**characterized in**
**that** the plausibility check is carried out in a learning-capable manner, preferably in that a warning sequence is initiated when a negative evaluation result is determined, such that an operator input for adapting the comparison value is requested and/or evaluated.

12. The method (100) according to any one of claims 5 to 11,
**characterized in**
**that** storage and/or forwarding of the process data value, in particular by data transmission via a transmission device (3), in particular from an upstream individual machine (2a, 2b) of the upstream partial process (120a, 120b) to a downstream individual machine (2c) of the downstream partial process (120c), is encrypted and/or tamper-proof and/or securitycertified.

13. The method (100) according to any one of claims 5 to 12,
**characterized in**
**that** the process data value is determined in the upstream partial process (120a, 120b), wherein the downstream partial process (120c) performs the plausibility check of the process data value determined in the upstream partial process (120a, 120b), so that a downstream individual machine (2c) of the downstream partial process (120c) is controlled in particular as a function of the process data value determined in the upstream partial process (120a, 120b).

14. The method (100) according to any one of claims 5 to 13,
**characterized in**
**that** at least one individual machine (2) is provided for carrying out one of the partial processes (120), which is designed according to a device (10) according to any one of claims 1 to 2, and/or in that a system (1) can be operated according to any one of claims 3 to 4.

## Revendications

1. Dispositif (10), conçu pour être utilisé dans un système (1) conçu pour l'exécution d'au moins un processus industriel automatisé (110), à savoir un processus de pesage et/ou de remplissage et/ou de disposition et/ou d'emballage,
dans lequel l'ensemble du processus (110) comprend au moins deux processus partiels (120),
dans lequel le dispositif constitue une machine individuelle (2) du système (1),
et dans lequel, au-delà des processus partiels, une directive de processus (130) est prédéfinie, qui comprend au moins une valeur de comparaison pour au moins une valeur de données de processus concernant l'ensemble du processus,
le dispositif (10) comprenant :
- une unité de mémoire de données (20) pour le stockage durable de l'au moins une valeur de données de processus concernant l'ensemble du processus,
- au moins un capteur (30) pour la détermination de l'au moins une valeur de données de processus concernant l'ensemble du processus, qui est pertinente pour l'ensemble du processus à l'aide d'une mesure d'au moins un paramètre de processus partiel concernant l'ensemble du processus du dispositif (10), dans lequel le paramètre de processus partiel est une grandeur de mesure au niveau du dispositif (10),
- un dispositif de traitement (40) pour le traitement de la valeur de données de processus, qui est relié électriquement avec le capteur (30),
- un dispositif d'interface (50) pour la liaison de données et pour la transmission de la valeur des données du processus à au moins une machine individuelle (2a, 2b, 2c) disposée en amont et/ou en aval dans le processus (110),
dans lequel le dispositif (10) est conçu pour effectuer une comparaison de la valeur des données du processus avec la directive de processus (130) prédéfinie afin d'évaluer l'ensemble du processus (110).

2. Dispositif (10) selon la revendication 1,
**caractérisé en ce que**
le dispositif (10) comprend une unité de mémoire de données non volatile (20), afin de stocker durablement la valeur de données de processus déterminée, et/ou **en ce que** le dispositif (10) est conçu comme une machine industrielle et/ou un robot.

3. Système (1) conçu pour l'exécution d'au moins un processus industriel automatisé (110), à savoir un processus de pesage et/ou de remplissage et/ou de disposition et/ou d'emballage, plus particulièrement pour la fabrication et/ou l'emballage de sacs, ce système (1) comprenant :
- au moins deux machines individuelles (2) chacune pour l'exécution d'un processus partiel (120) respectif de l'ensemble du processus (110), dans lequel les machines individuelles (2) comprennent chacune au moins un capteur (30) pour la détermination d'au moins une valeur de données de processus concernant l'ensemble du processus à l'aide d'une mesure d'au moins un paramètre de processus partiel concernant l'ensemble du processus,
- au moins un dispositif de transmission (3) pour la liaison de données avec les machines individuelles (2) respectives, afin de mettre à disposition la valeur de données du processus pour tous les processus partiels,
dans lequel au moins une des machines individuelles (2) est conçue comme un dispositif (10) selon l'une des revendications 1 à 2.

4. Système (1) selon la revendication 3,
**caractérisé en ce que**
les machines individuelles (2) comprennent au moins une des machines suivantes :
- une housseuse, dans lequel, plus particulièrement, le paramètre de processus partiel correspondant est une courbe force/course lors de l'étirage d'un film par la housseuse,
- un palettiseur, dans lequel, plus particulièrement, le paramètre de processus partiel correspondant est une force lors du déplacement d'un produit, plus particulièrement de sacs, par le palettiseur et/ou un poids et/ou une hauteur de la palette du palettiseur,
- une machine de remplissage, de préférence une machine « form-fill-seal », dans lequel, plus particulièrement, le paramètre de processus partiel correspondant est une force lors du transport du produit et/ou un temps de remplissage et/ou une densité de produit en vrac et/ou un poids du produit.

5. Procédé (100) pour une évaluation dans le cas d'au moins un processus industriel automatisé (110), à savoir un processus de pesage et/ou de remplissage et/ou de disposition et/ou d'emballage, plus particulièrement pour la fabrication et/ou l'emballage de sacs, exécuté dans un système (1) selon la revendication 3 ou 4,
dans lequel l'ensemble de processus (110) comprend au moins deux processus partiels (120),
dans lequel une directive de processus (130) est prédéfinie pour les processus partiels, qui comprend au moins une valeur de comparaison pour au moins une valeur de données de processus concernant l'ensemble du processus, qui est pertinente pour l'ensemble du processus (110),
**caractérisé par** les étapes suivantes
a) détermination de l'au moins une valeur de données de processus concernant l'ensemble du processus dans le cas d'au moins un processus partiel en amont (120a, 120b) et/ou dans le cas d'un processus partiel en aval (120c) à l'aide d'une mesure d'au moins un paramètre de processus partiel concernant l'ensemble du processus d'un dispositif (10) selon l'une des revendications 1 à 2, dans lequel le paramètre de processus partiel est une grandeur de mesure au niveau du dispositif (10),
b) plausibilisation de la valeur de données de processus déterminée hors du processus partiel en amont (120a, 120b), de sorte que la valeur de données de processus est comparée avec la valeur de comparaison, ce qui permet de déterminer un résultat d'évaluation spécifique pour l'ensemble du processus (110), dans lequel le processus partiel en amont (120a, 120b) est évalué à l'aide du résultat d'évaluation,
dans lequel un stockage durable du résultat d'évaluation et/ou de la valeur de données de processus a lieu dans un enregistrement de processus.

6. Procédé (100) selon la revendication 5,
**caractérisé en ce que**
un stockage durable du résultat d'évaluation et/ou de la valeur de données de processus a lieu de manière centrale pour l'ensemble des processus partiels (120) du processus a lieu dans un enregistrement de processus.

7. Procédé (100) selon la revendication 5 ou 6,
**caractérisé en ce que**
un produit du processus partiel en aval (120c), plus particulièrement un produit final de l'ensemble du processus (110), est muni d'un identifiant, de préférence d'un code lisible par une machine, qui comprend de préférence des informations concernant un enregistrement de processus et/ou est créé en fonction de l'enregistrement de processus.

8. Procédé (100) selon l'une des revendications 5 à 7,
**caractérisé en ce que**
l'au moins une valeur de comparaison définit au moins une plage de valeurs, dans lequel un processus d'alarme est initié lorsque, selon la plausibilisation, un écart de la valeur de données du processus par rapport à la plage de valeurs est constaté, dans lequel, de préférence, le processus d'alarme comprend une instruction à un opérateur du processus partiel en aval (120c).

9. Procédé (100) selon l'une des revendications 5 à 8,
**caractérisé en ce que**
chaque processus partiel (120) est exécuté par respectivement au moins une machine (2) correspondant au processus partiel (120) respectif, dans lequel, dans chaque processus partiel (120), est déterminée au moins une valeur de données de processus spécifique concernant l'ensemble du processus, plus particulièrement à l'aide d'une mesure d'au moins un paramètre de processus partiel concernant l'ensemble du processus de la machine individuelle (2) respective, dans lequel, de préférence, l'au moins une valeur de données de processus comprend au moins une valeur de mesure et/ou un tracé de la valeur de mesure.

10. Procédé (100) selon l'une des revendications 5 à 9,
**caractérisé en ce que**
la valeur de données de processus est déterminée à l'aide d'une mesure d'un paramètre de processus partiel concernant l'ensemble du processus spécifique au matériel et/ou spécifique à la machine individuelle et/ou spécifique au produit et/ou spécifique au processus de livraison.

11. Procédé (100) selon l'une des revendications 5 à 10,
**caractérisé en ce que**
la plausibilisation est effectuée par apprentissage, de préférence grâce au fait qu'un processus d'alarme lors de la détermination d'un résultat d'évaluation négatif est initié de sorte qu'une entrée de l'opérateur est demandée et/ou analysée pour l'adaptation de la valeur de comparaison.

12. Procédé (100) selon l'une des revendications 5 à 11,
**caractérisé en ce que**
un stockage et/ou une transmission de la valeur de données de processus a lieu de manière cryptée et/ou infalsifiable et/ou certifiée en termes de sécurité, plus particulièrement à l'aide d'une transmission de données par l'intermédiaire d'un dispositif de transmission (3), plus particulièrement par une machine individuelle en amont (2a, 2b) du processus partiel en amont (120a, 120b) à une machine individuelle en aval (2c) du processus partiel en aval (120c).

13. Procédé (100) selon l'une des revendications 5 à 12,
**caractérisé en ce que**
la valeur de données du processus est déterminée dans le cas du processus partiel en amont (120a, 120b), dans lequel le processus partiel en aval (120c) effectue la plausibilisation de la valeur de données de processus déterminée pour le processus partiel en amont (120a, 120b), de sorte, plus particulièrement, que, en fonction de la valeur de données de processus déterminée pour le processus partiel en amont (120a, 120b), une machine individuelle en aval (2c) du processus partiel en aval (120c) est contrôlée.

14. Procédé (100) selon l'une des revendications 5 à 13,
**caractérisé en ce que**
au moins une machine individuelle (2) est prévue pour l'exécution d'un des processus partiels (120), qui est conçue selon un dispositif (10) selon l'une des revendications 1 ou 2 et/ou **en ce qu'**un système (1) peut fonctionner selon l'une des revendications 3 ou 4.
